# EUROPEAN PATENT SPECIFICATION

(11) **EP 1 486 848 B1**
(45) Date of publication and mention of the grant of the patent: **24.11.2010**
(21) Application number: 04102685.7
(22) Date of filing: 14.06.2004
(51) Int. Cl.: G05G 1/58, G05G 9/047, G05G 1/62, A01B 63/00, E02F 9/20

(54) **Joystick control**
Steuerknüppel
Levier de commande

(30) Priority: 14.06.2003 GB 0313856
(43) Date of publication of application: 15.12.2004
(73) Proprietor: CNH U.K. LIMITED, Basildon, Essex S14 3AD (GB)
(72) Inventor: Mowatt, Jeffrey William, Billericay, Essex CM11 1BY (GB); Hipsey, Martin Jon, Burnham-on-Crouch, Essex CMO 8LR (GB); Colliar, James, Billericay, Essex CM12 OAA (GB)
(74) Representative: CNH IP Department

(56) References cited:
- EP-A- 0 444 260
- EP-A- 0 965 901
- US-A- 4 526 055
- US-A- 5 630 756

## Description

The present invention relates to a joystick control and in particular to one suitable for use in the control panel of an agricultural vehicle.

In the can of an agricultural vehicle there are numerous controls including those needed to operate ancillary equipment. For some equipment, it is desirable to use a joystick while for others the controls may have the form of ON/OFF toggle switches, push buttons, rotary and linearly slidable control knobs, and so on.

Operating the controls, especially while the vehicle is being driven over rough terrain can present a problem because the control panel tends to be crowed. While operating a switch, it is possible accidentally to knock a joystick control which can prove dangerous.

US-A-4 526 055 discloses a locking control lever arrangement in which a pivotally mounted control lever is provided with linkages for connecting the control lever with a number of functions which need to be controlled. The arrangement further provides a locking device which locks the linkages of the control lever in a given position. By locking these linkages in a given position, no movement of the control lever itself is possible anymore. Thus, no transfer of signals will be given via the linkages to the functions it normally controls.

However, setting a control which is not located on the joystick itself and that requires fine adjustment when the operator's hand is not being steadied can be difficult to achieve and there is rarely sufficient space on the control panel to accommodate a dedicated wrist support.

With a view to mitigating the foregoing problems, the present invention provides a joystick control according to claim 1.

Though the locking mechanism may act only to lock the joystick in a predetermined position, it is preferred for it to be able to lock the joystick in any previously set position.

For increased comfort, it is preferred for the top surface of the joystick to be padded or formed of a soft conformable material.

In a second aspect, the invention provides a control panel comprising a joystick control as set forth above in combination with a plurality of manually operable further controls positioned to be within the reach of a hand resting on the top surface of the joystick.

The further controls may be toggle switches, push buttons, rotary or linearly slidable control knobs.

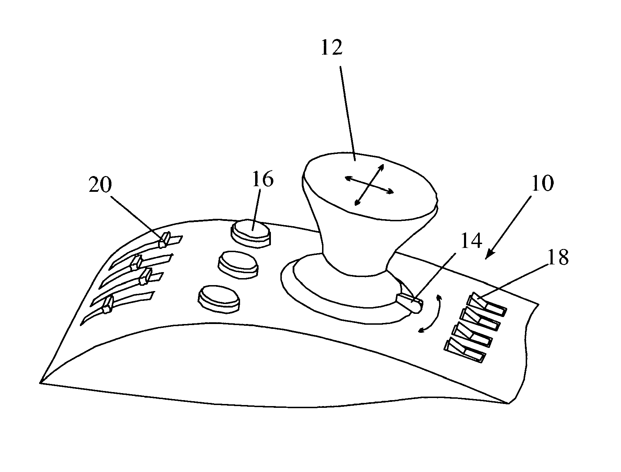

The invention will now be described further, by way of example, with reference to the accompanying drawing which is a perspective view of part of a control panel of an agricultural vehicle.

The single figure shows part of a control panel 10 of an agricultural vehicle, such as a tractor. The panel carries several controls for the different items of equipment on the vehicle. Amongst the controls is a joystick 12, push buttons 16, toggle switches 18 and linear potentiometers 20. The function served by the various controls is not of significance to the present invention and will not therefore be described in detail. The controls may for example be for a mechanical digger or the hitch of a plough.

The problem that the vehicle driver has in operating all these controls is that it is easy to knock the joystick 12 when operating one of the other controls and adjusting the positions of the linear potentiometers 20 is not easy when there is no convenient place for the driver to steady his hand.

To mitigate these problems, the invention provides a locking mechanism which can lock the joystick 12. In the case of the illustrated embodiment, the joystick 12 can be locked in any position by turning the collar surrounding the base of the joystick using the finger grip 14. If the base of the joystick is designed as a ball and socket joint, the action of the collar is to clamp the ball down within its socket enabling the joystick to be locked in any position. It would be alternatively possible to provide a locking pin to lock the joystick in only one predetermined position but this would render the joystick inoperative when it is locked.

By locking the joystick 12, it is ensured that its position will not be disturbed accidentally when operating one of the other controls, 16, 18 or 20.

A further advantage of locking the joystick is that its top surface can then be used as a wrist rest permitting the driver to steady his hand when operating sensitive controls such as the potentiometers 20. In this context, the top of the joystick is to be padded or made of a conformable material such as a rubber or an elastomeric foam.

## Claims

1. A joystick control having a joystick (12) pivotable about orthogonal axes and a locking mechanism (14) to prevent pivotal movement of the joystick (12), wherein the top surface of the joystick (12) is fashioned to enable the joystick (12) to function as a wrist support when its position is locked, **characterized in that** the top surface of the joystick (12) is padded or formed of a soft conformable material.

2. A joystick control as claimed in claim 1, wherein the locking mechanism (14) comprises a collar surrounding the base of the joystick (12) for locking the joystick (12) when the collar is turned around the base of the joystick.

3. A joystick control as claimed in claim 2, wherein the base of the joystick (12) is a ball and socket joint, such that, when the collar is turned around the base of the joystick, the collar is to clamp the ball down within its socket.

4. A joystick control as claimed in claim 2 or 3, wherein the collar is movable around the base of the joystick by moving the finger grip (14)

5. A joystick control as claimed in any of the preceding claim, wherein the locking mechanism (14) is operative to lock the joystick (12) in a predetermined position.

6. A joystick control as claimed in any of the claim 1 to 4, wherein the locking mechanism (14) is operative, to lock the joystick (12) in any preset position.

7. A control panel (10) comprising a joystick control as claimed in any preceding claim in combination with a plurality or manually operable further controls (16, 18, 20) positioned to be within the reach of a hand resting on the top surface of the joystick (12).

## Patentansprüche

1. Steuerknüppel-Steuerung mit einem Steuerknüppel (12), der um zueinander orthogonale Achsen verschwenkbar ist, und mit einem Verriegelungs-Mechanismus (14) zum Verhindern einer Schwenkbewegung des Steuerknüppels (12), wobei die obere Oberfläche des Steuerknüppels (12) so geformt ist, dass der Steuerknüppel (12) als eine Handgelenk-Abstützung dienen kann, wenn seine Position verriegelt ist, **dadurch gekennzeichnet, dass** die obere Oberfläche des Steuerknüppels (12) gepolstert oder aus einem weichen formanpassenden Material gebildet ist.

2. Steuerknüppel-Steuerung nach Anspruch 1, bei der der Verriegelungs-Mechanismus (44) einen Bundring umfasst, der die Basis des Steuerknüppels (12) umgibt, um den Steuerknüppel (12) zu verriegeln, wenn der Bundring um die Basis des Steuerknüppels herum gedreht wird.

3. Steuerknüppel-Steuerung nach Anspruch 2, bei der die Basis des Steuerknüppels (12) ein Kugelgelenk ist, derart, dass wenn der Bundring um die Basis des Steuerknüppels herum gedreht wird, der Bundring die Kugel in ihrer Kugelpfanne festklemmt.

4. Steuerknüppel-Steuerung nach Anspruch 2 oder 3, bei der der Bundring um die Basis des Steuerknüppels herum durch Bewegen eines Fingergriffes (14) beweglich ist.

5. Steuerknüppel-Steuerung nach einem der vorhergehenden Ansprüche, bei der der Verriegelungsmechanismus (14) zum Verriegeln des Steuerknüppels (12) in einer vorgegebenen Position betreibbar ist.

6. Steuerknüppel-Steuerung nach einem der Ansprüche 1 bis 4, bei der der Verriegelungsmechanismus (14) zum Verriegeln des Steuerknüppels (12) in irgendeiner voreingestellten Position betreibbar ist.

7. Steuer-Bedienfeld (10) mit einer Steuerknüppel-Steuerung nach einem der vorhergehenden Ansprüche, in Kombination mit einer Mehrzahl von manuell betätigbaren weiteren Steuerungen (16, 18, 20), die so angeordnet sind, dass sie innerhalb der Reichweite einer Hand liegen, die auf der oberen Oberfläche des Steuerknüppels (12) ruht.

## Revendications

1. Manette de commande comportant une manette (12) pivotable autour d' axes orthogonaux et un mécanisme de verrouillage (14) destiné à empêcher un mouvement de pivotement de la manette (12), **caractérisée en ce que** la surface supérieure de la manette (12) est façonnée pour permettre à la manette (12) de fonctionner comme un support de poignet lorsque sa position est verrouillée, **caractérisée en ce que** la surface supérieure de la manette (12) est rembourrée ou constituée d' un matériau doux et malléable.

2. Manette de commande selon la revendication 1, **caractérisée en ce que** le mécanisme de verrouillage (14) comprend une bague entourant l' embase de la manette (12) pour verrouiller la manette (12) lorsqu' on fait tourner la bague autour de l' embase de la manette.

3. Manette de commande selon la revendication 2, **caractérisée en ce que** l' embase de la manette (12) est un joint à rotule, constitué de telle sorte que, lorsqu' on fait tourner la bague autour de l' embase de la manette, la bague a pour effet de serrer la boule dans son palier.

4. Manette de commande selon la revendication 2 ou 3, **caractérisée en ce que** la bague est mobile autour de l' embase de la manette en déplaçant la prise pour les doigts (14)

5. Manette de commande selon l'une quelconque des revendications précédentes, **caractérisée en ce que** le mécanisme de verrouillage (14) est opérationnel pour verrouiller la manette (12) dans une position prédéterminée.

6. Manette de commande selon l'une quelconque des revendications 1 à 4, **caractérisée en ce que** le mécanisme de verrouillage (14) est opérationnel pour verrouiller la manette (12) dans une position quelconque préréglée.

7. Tableau de bord (10) comprenant une manette de commande selon l'une quelconque des revendications précédentes en association avec une pluralité d' autres dispositifs de commande manipulables manuellement (16, 18, 20) et positionnés pour être à la portée d' une main reposant sur la surface supérieure de la manette (12).
